# EUROPEAN PATENT SPECIFICATION

(11) **EP 1 394 382 B1**
(45) Date of publication and mention of the grant of the patent: **17.10.2007**
(21) Application number: 03019757.8
(22) Date of filing: 29.08.2003
(51) Int. Cl.: F02B 61/02, F02B 63/00, F02B 67/04, F02F 1/10, F02B 75/20, B62M 7/02

(54) **Motorcycle engine**
Motorradbrennkraftmaschine
Moteur à combustion interne pour un moto-cycle

(30) Priority: 29.08.2002 JP 2002251678
(43) Date of publication of application: 03.03.2004
(73) Proprietor: YAMAHA HATSUDOKI KABUSHIKI KAISHA, Iwata-shi, Shizuoka-ken (JP)
(72) Inventor: Bunai, Takashi, Iwata-shi, Shizuoka-ken (JP)
(74) Representative: Grünecker, Kinkeldey, Stockmair & Schwanhäusser Anwaltssozietät

(56) References cited:
- EP-A- 0 987 413
- US-A- 4 903 483
- PATENT ABSTRACTS OF JAPAN vol. 1998, no. 08, 30 June 1998 (1998-06-30) & JP 10 077861 A (YAMAHA MOTOR CO LTD), 24 March 1998 (1998-03-24)
- PATENT ABSTRACTS OF JAPAN vol. 2000, no. 15, 6 April 2001 (2001-04-06) & JP 2000 343969 A (YAMAHA MOTOR CO LTD), 12 December 2000 (2000-12-12)
- PATENT ABSTRACTS OF JAPAN vol. 1996, no. 08, 30 August 1996 (1996-08-30) & JP 8 100653 A (SUZUKI MOTOR CORP), 16 April 1996 (1996-04-16)
- PATENT ABSTRACTS OF JAPAN vol. 1997, no. 01, 31 January 1997 (1997-01-31) & JP 8 232673 A (YAMAHA MOTOR CO LTD), 10 September 1996 (1996-09-10)

## Description

The present invention relates to a motorcycle engine, in particular to a motorcycle engine provided with accessories which are driven by a crankshaft.

Conventionally, a motorcycle engine adopts a structure in which accessories such as a cooling water pump and an oil pump are connected to a crankshaft via transmission means and the motorcycle engine drives the accessories with its own power. As a motorcycle of this type, for example, there is one disclosed in JP-A-10-77861.

In a motorcycle engine described in this publication, an axial line of a cylinder is formed so as to slant to be higher in the front thereof in a vehicle mounted state, and a transmission is provided behind a cylinder body.

The cooling water pump and the oil pump of this engine are mounted on a bottom portion of a crankcase below the transmission in a state in which an axial line direction points to a vehicle width direction. In addition, the cooling water pump and the oil pump are axially mounted on one end portion and the other end portion of one rotary shaft, and the rotary shaft is connected to an input shaft of the transmission by a chain extending in a vertical direction.

However, in the conventional motorcycle engine constituted as described above, a chain for transmitting rotation of an input shaft of the transmission to the rotary shaft for the cooling water pump and the oil pump extend from an upper end portion to a lower end portion in the crankcase, and a space for housing the chain has to be formed in a large size in the crankcase. Consequently, in the above-mentioned conventional motorcycle engine, since transmission means for driving accessories is enlarged, there is a limit in forming the engine in a small size.

The present invention has been devised in order to eliminate such a problem, and it is an object of the present invention to provide a motorcycle engine having simplified transmission means for transmitting power of the engine to said accessories and enabling to build the engine in a small size.

This objective is solved by a motorcycle engine having a power transmission route consisting of serially arranged coupling gears coupling together accessories driven by a crankshaft.

According to a preferred embodiment of the present motorcycle engine, a rotation of the crankshaft is transmitted from one end portion of the power transmission route to the other portions thereof via the coupling gears, wherein each of the accessories is connected to one of said serially arranged coupling gears.

Preferably, a rotation of the crankshaft is transmitted to a driving gear on a crankshaft side for driving the accessories from a deceleration small gear, said deceleration small gear being adapted to transmit rotation of the crankshaft to a clutch of a rear wheel drive system.

Therein, it is further preferable that an idler gear located in one end portion of the power transmission route is provided, said idler gear comprising an idling shaft, a large diameter gear constituting said driving gear in mesh contact with the deceleration small gear of the crankshaft, and a small diameter gear in mesh contact with at least one of the coupling gears.

Further therein, it is also preferable if the small diameter gear of the idler gear is in mesh contact with two of the accessories, said two accessories preferably being arranged on in general opposite sides of the idler gear.

According to a further preferred embodiment, the accessories connected by the power transmission route, in particular a cooling water pump, an alternator, and an oil pump, are provided in a front end portion of the engine and an end portion on an vehicle body right side, one above the top of the other.

Therein, it is preferable that said accessories are disposed side by side in a vertical direction in the end portion on a vehicle body front side of an engine such that axial lines thereof become parallel with a vehicle width direction, wherein rotary shafts of these accessories are connected to the coupling gears to be operated in association with each other.

Therein, it is also preferable that the coupling gears connected to the rotary shafts of the alternator and the cooling water pump are in mesh contact with each other, wherein one of said coupling gears, either the coupling gear connected to the rotary shaft of the alternator or the coupling gear connected to the rotary shaft of the cooling water pump is in mesh contact with the small diameter gear.

According to another embodiment, an oil pump is disposed in a lower part on a vehicle front side in a crankcase and supplies oil from an oil pan to an oil cooler attached to a rear end portion of the oil pan, wherein the coupling gear connected to the driving shaft of the oil pump is engaged with the small diameter gear.

According to yet another embodiment, the accessories are disposed so as to be distributed to one side and the other side of the vehicle width direction with a gear coupling portion of the power transmission route as a center.

Therein, it is preferable that the alternator and the cooling water pump are disposed so as to be distributed to one side and the other side of the vehicle width direction with the gear coupling portion having the respective coupling gears as a center.

According to still another embodiment, there is provided a fuel pump, wherein power is transmitted to the fuel pump via the deceleration small gear of the crank shaft and a deceleration large gear of the rear wheel drive system.

In the following, the present invention is explained in greater detail with respect to several embodiments thereof in conjunction with the accompanying drawings, wherein:
- Fig. 1: is a side view of a motorcycle mounted with an engine in accordance with an embodiment,
- Fig. 2: is a right side view of an engine and a vehicle body frame,
- Fig. 3: is a side view for explaining a drive system for an accessory,
- Fig. 4: is a longitudinal sectional view of a cooling water pump and a drive system therefore,
- Fig. 5: is a transverse sectional view of the cooling water pump and a cylinder body, and
- Fig. 6: is a perspective view of a motorcycle engine in accordance with the present embodiment.

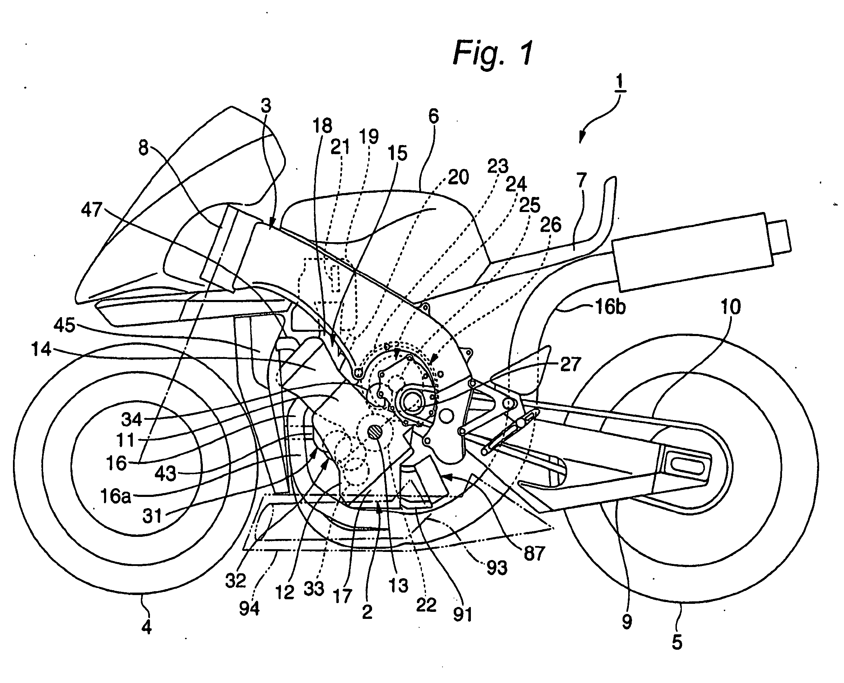

An embodiment of a motorcycle engine will be hereinafter described in detail according to Figs. 1 to 6.

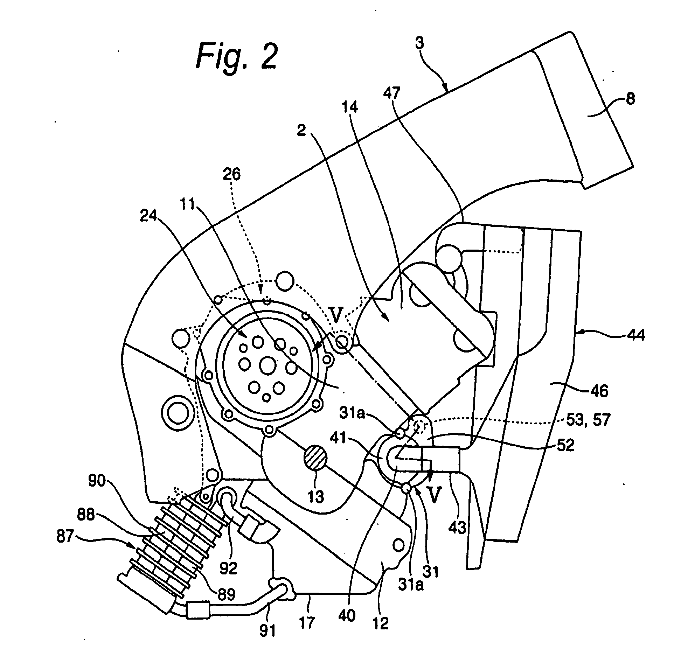

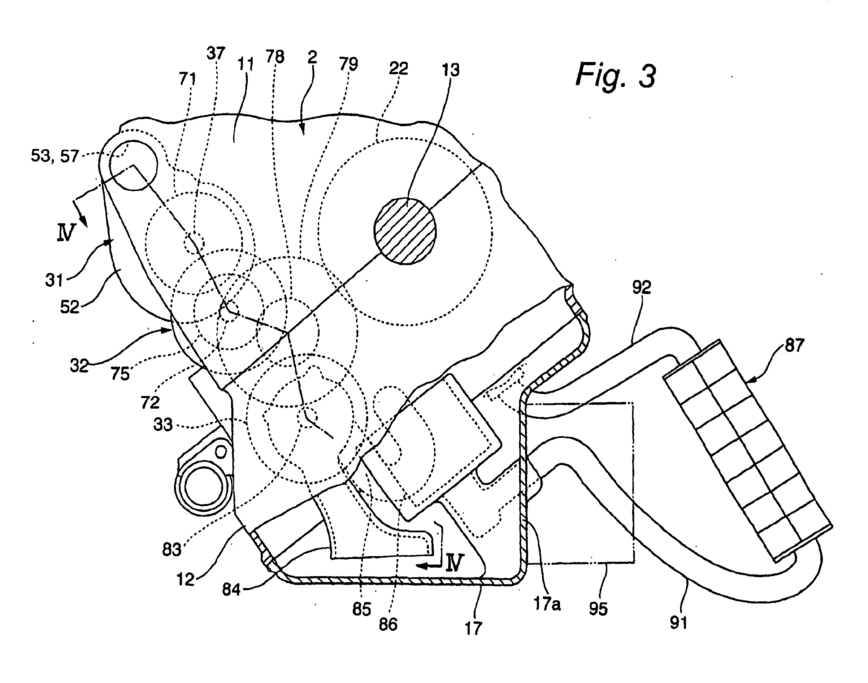

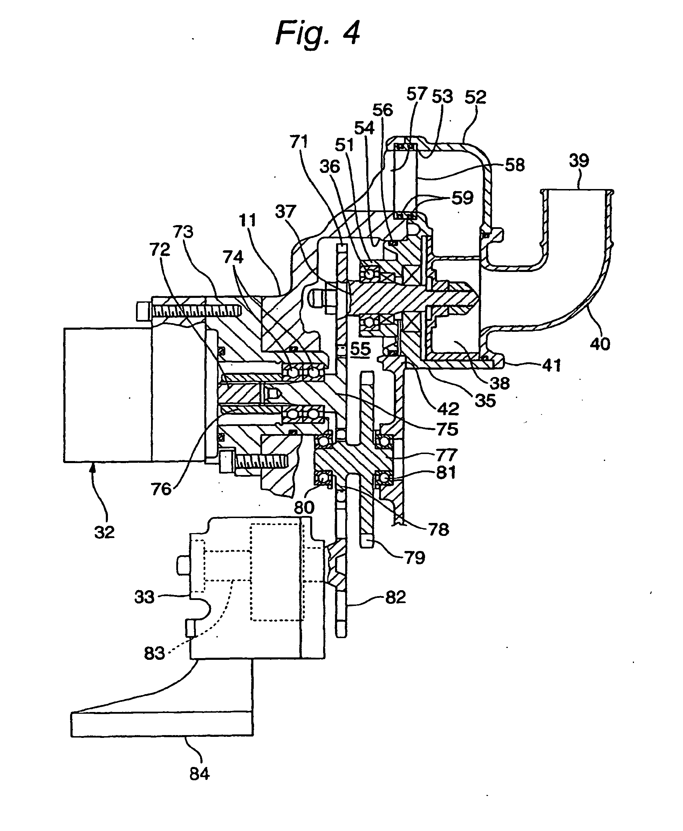

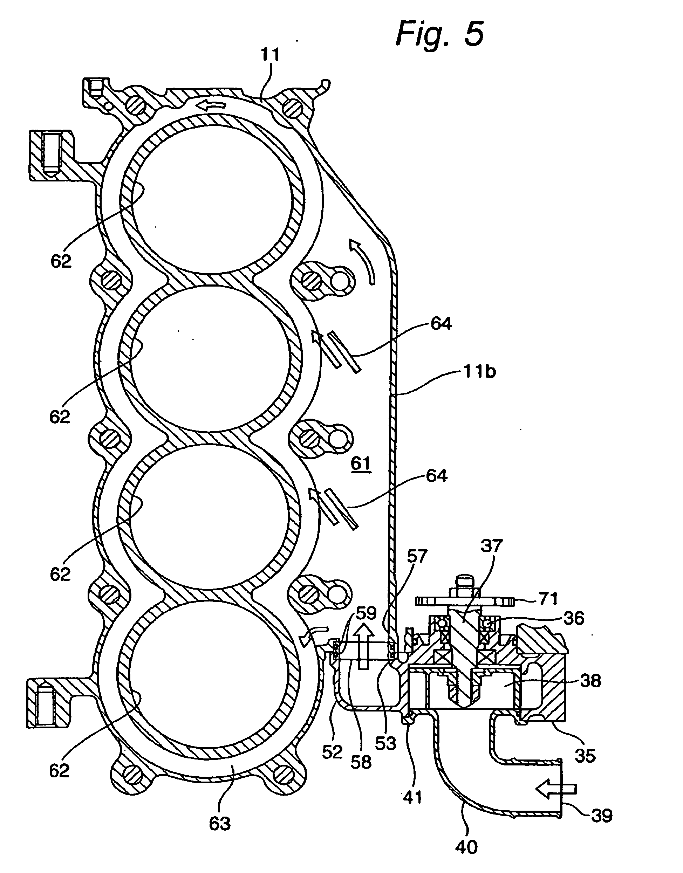

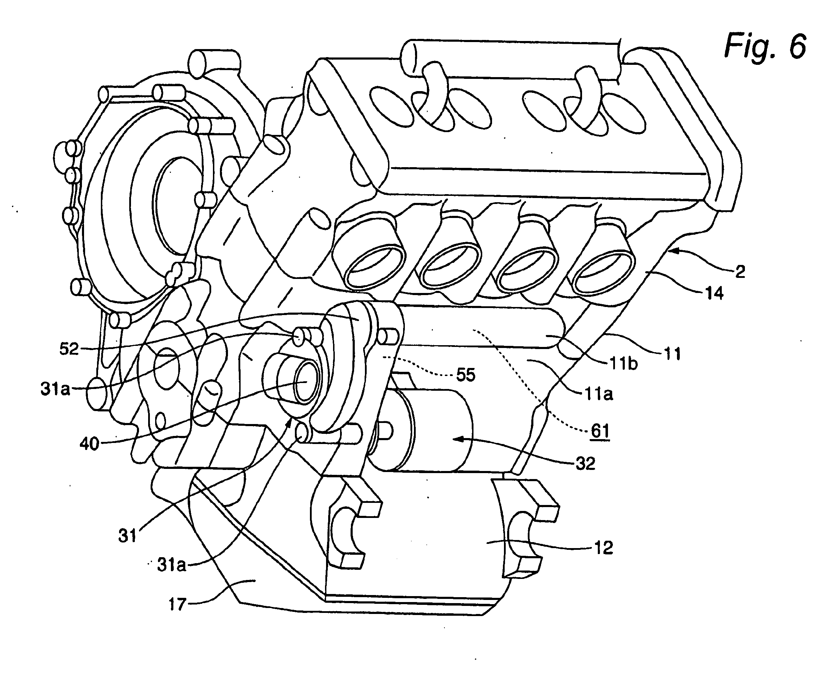

Fig. 1 is a side view of a motorcycle mounted with an engine in accordance with the present embodiment, Fig. 2 is a right side view of the engine and a vehicle body frame, and Fig. 3 is a side view for explaining a drive system for accessories, which is drawn in a state in which a lower end portion of the engine is cut away. Fig. 4 is a longitudinal sectional view of the cooling water pump and the drive system therefor, a cutting away position of which is indicated by line IV-IV in Fig. 3. Fig. 5 is a transverse sectional view of the cooling water pump and a cylinder body, a cutting-away position of which is indicated by line V-V in Fig. 2. Fig. 6 is a perspective view of the motorcycle engine in accordance with the present embodiment.

In these figures, what is denoted by reference numeral 1 is a motorcycle mounted with an engine 2 according to this embodiment. This motorcycle 1 is a motorcycle for a race, and therefore the engine 2 is constituted so as to be short in a longitudinal direction in order to improve traveling performance, In Fig. 1, reference numeral 3 denotes a vehicle body frame of the motorcycle 1; 4, a front wheel; 5, a rear wheel; 6, a fuel tank; and 7, a seat.

Although not illustrated in Fig. 1, the front wheel 4 is rotatably supported on a telescopic front fork, which is pivotably attached to a head pipe 8 of the vehicle body frame 3, in the same manner as the conventional motorcycle. A steering handle is provided in an upper end portion of the front fork. In addition, the rear wheel 5 is supported by a rear arm 9 swingably in a vertical direction on the vehicle body frame, and power is transmitted to the rear wheel 5 from the engine 2 by a driving chain 10.

The engine 2 is an engine of water cooling DOHC four cylinder type, in which a crankshaft 13 is rotatably supported by a cylinder body 11 and a crankcase 13 connected to a lower end of this cylinder body 11, and an inlet system 15 and an exhaust pipe 16 are connected to a cylinder head 14 attached to an upper end portion of the cylinder body 11. In addition, an oil pan 17 is attached to a lower end portion of the crankcase 12 of the engine 2.

The inlet system 15 is constituted by a throttle valve device 18 connected to the cylinder head 14, an air cleaner 19 located on an upstream side of this throttle valve device 18, and the like. First and second injectors 20, 21 for supplying fuel to this engine 2 are provided in the throttle valve device 18 and the air cleaner 19. The exhaust pipe 16 has a structure in which an upstream portion 16a formed for each cylinder extends downward in front of the engine 2 and gathers below the engine, and is formed such that one downstream portion 16b is guided further to the rear of a vehicle body right side than the engine 2.

A rear wheel drive system is connected to an end portion on the vehicle body right side of the crankshaft 13. This rear wheel drive system is constituted by a deceleration small gear 22 formed integrally with a crank web (not show) of the crankshaft 13, a clutch 24 having a deceleration large gear 23 to be engaged with this deceleration small gear 22, a transmission 26 having an input shaft 25 connected to an output side of this clutch 24, the chain for transmitting rotation of an output shaft 27 of this transmission 26 to the rear wheel 5, and the like.

The engine 2 according to this embodiment is constituted such that power is transmitted to all accessories which are driven by the crankshaft 13 from the crankshaft 13 via the deceleration small gear 22 as well as to the rear wheel drive system. Here, the accessories for this engine 2 will be described.

The accessories for this engine 2 are a cooling water pump 31, an alternator 32, and an oil pump 33 which are provided in a front end portion of the engine 2 and an end portion on the vehicle body right side, one above the top of the other, a fuel pump 34 provided behind the cylinder body 11 and above the transmission 24, and the like. This fuel pump 34 is a pump for supplying fuel to the first and second injectors 20, 21 provided in the inlet system 15, to which power is transmitted from the crankshaft 13 via the deceleration small gear 22 and the deceleration large gear 23.

As shown in Fig. 2, the cooling water pump 31 is attached to the front end portion of the cylinder body 11 and the end portion on the vehicle body right side by a fixing bolt 31 in a state in which an axial line direction thereof points to the vehicle width direction. Describing this more in detail, as shown in Figs. 4 and 5, this cooling water pump 31 is constituted by a rotary shaft 37 rotatably supported on a pump housing 35 by a bearing 36, an impeller 38 adhered to this rotary shaft 37, and a cover 41 with an inlet pipe 40 having a cooling water inlet 39 formed integrally and covering an inlet side of the impeller 38, and is assembled with the cylinder body 11 in a state in which the pump housing 35 is fitted in a saddle 42 which is formed so as to point to the right of the vehicle body.

As shown in Fig. 2, a cooling water outlet of a radiator 44 is connected to the inlet pipe 40 of the cover 41 via a cooling water supply hose 43. As shown in Fig. 1, the radiator 44 is disposed between the front wheel 4 and the engine 2 and adopts a structure in which cooling water flows from a tank 45 on the vehicle body left side to a tank 46 on the vehicle body right side (see Fig. 2). A cooling water passage in the cylinder head 14 is connected to a rear end portion and a uppermost part of the tank 45 on the vehicle body left side of this radiator 44 via a cooling water return hose 47. On the other hand, the cooling water supply hose 43 extends to the front of the vehicle body from the cooling water pump 31, and a front end thereof is connected to a rear end portion of the tank 46 on the vehicle body right side of the radiator 44.

The pump housing 35 of the cooling water pump 31 is constituted by integrally forming a boss 51 supporting the rotation shaft 37 and a shroud 52 extending to in a radial direction outward (upward in this embodiment) from this boss 51. As the impeller 38 rotates, this cooling water pump 31 sucks cooling water from the inlet pipe 40 of the cover 41 and discharges the cooling water from a cooling water outlet 53 in an upper end portion of the shroud 52.

The boss 51 faces the inside of a circular hole 54 drilled in the saddle 42 of the cylinder body 11. A seal member 56 is interposed in this part in order to prevent oil from leaking from a gear chamber 55 (see Fig. 4) formed in the cylinder body 11 so as to extend in the vertical direction.

The shroud 52 has a cooling water outlet 53 which is formed in an upper portion thereof and on the cylinder body 11 side, and is connected by a joint 58 to a cooling water inlet 57 on the engine 2 side, which is formed on the saddle 42 so as to be opposed to this cooling water outlet 53, in a state in which opening edges thereof are joined. This joint 58 is formed in a cylindrical shape and fitted in the inside of both the openings 53, 57. In addition, seal members 59 are interposed between this joint 58 and the cylinder body 11 and between this joint 58 and the shroud 52 in order to prevent cooling water from leaking.

As shown in Fig. 5, the cooling water inlet 57 of the cylinder body 11 communicates with a cooling water distribution chamber 61 in the cylinder body 11. This cooling water distribution chamber 61 is formed so as to communicate with lower end portions of water jackets 63 formed around cylinder holes 62 in the cylinder body 11 and extend from one side portion to the other side portion in the vehicle width direction. In this embodiment, as shown in Fig. 6, the cooling water distribution chamber 61 is formed inside a swelled portion 11 b which is provided on a front wall 11 a of the cylinder body 11 so as to be partially swelled to the front.

The cooling water inlet 57 is formed in an end portion on the vehicle body right side of this cooling water distribution chamber 61, and the water jackets 63 are connected to a vehicle body rear side of the cooling water distribution chamber 61. Guide plates 64 for changing a flowing direction of the cooling water, which has flown in from the cooling water inlet 57, from the vehicle width direction to the backward are provided in two parts in the cooling water distribution chamber 61.

As shown in Figs. 3 and 4, a drive system for driving this cooling water pump 31 adopts a structure in which a coupling gear 71 fixed to a vehicle body inner side of the rotary shaft 37 is rotated by another accessory. In this embodiment, another accessory is an alternator 32 attached to the front end portion of the cylinder body 11 so as to be located on the inner side of the vehicle body at the place much lower than the cooling water pump 31.

As shown in Figs. 4 and 6, this alternator 32 is attached to a front end portion of the cylinder body 11 so as to be located on the vehicle body of inner side at the place much lower than the cooling water pump 31. That is, this alternator 32 and the cooling water pump 31 are disposed so as to be distributed to one side and the other side of the vehicle width direction with the gear coupling portion having the coupling gear 71 as a center.

As shown in Fig. 4, the alternator 32 is attached to the cylinder body 11 via a holder 73 in a state in which a rotary shaft 72 points to the vehicle width direction. A coupling gear 75 rotatably supported on the holder 73 by a bearing 74 is coupled to the rotary shaft via a coupling 76 so as to rotate integrally. An upper portion of the coupling gear 75 of this alternator 32 is engaged with the coupling gear 71 of the cooling water pump 31 and a lower portion thereof is engaged with a small diameter gear 78 of an idler shaft 77 described later. In this embodiment, the driving gear in accordance with the teaching of the present embodiment is constituted by this small diameter gear 78.

The idler shaft 77 is formed integrally with the small diameter gear 78 and a large diameter gear 79 apart further to the vehicle body right side than this small diameter gear 78 such that the small diameter gear 78 and the large diameter gear 79 are located on an identical axial line, and is supported rotatably on the cylinder body 11 and the crankcase 12 via bearings 80, 81. As shown in Fig. 3, the large diameter gear 79 is engaged with the deceleration small gear 22 of the crankshaft 13.

That is, the rotary shafts 37, 72 of the cooling water pump 31 and the alternator 32 are coupled so as to operate in association with each other by the coupling gears 71, 75, rotation of the deceleration small gear 22 of the crankshaft 13 is transmitted to the small diameter gear 78 of the idler shaft 77 located in one end portion of a power transmission route consisting of these coupling gears 71, 75, whereby the alternator 32 and the cooling water pump 31 are driven. In other words, rotation of the crankshaft 13 is transmitted from one end portion to the other end portion of the power transmission route via the respective coupling gears 71, 75, whereby the cooling water pump 31, which is located on the other end side and in a position relatively largely apart from the crankshaft 13, is driven by the alternator 32 located in one end side of this power transmission route.

In addition, as shown in Figs. 3 and 4, an oil pump driving gear 82 is engaged with the lower part of the small diameter gear 78 of the idler shaft 77 located at a lower end of the gear coupling portion of the cooling water drive system. This oil pump driving gear 82 is formed so as to rotate integrally with a rotary shaft 83 of the oil pump 33. The oil pump 33 according to this embodiment is arranged in the inside of the crankcase 12, supported on the crankcase 12 via a not-shown bracket, and is constituted so as to pump up oil stored in the oil pan 17 from an inlet port 84 having an oil strainer in a lower end portion and discharge the oil to an oil supply passage 85 (see Fig. 3) of the crankcase 12. As shown in Fig. 3, the oil supply passage 85 is formed so as to guide oil to a main oil passage (not shown) of the crankcase 12 via an oil filter 86 and an oil cooler 87 disposed behind the oil pan 17.

As shown in Fig. 2, the oil cooler 87 is a cooler of an air cooling type having formed therein oil tanks 88, 89 located in both end portions in the vehicle width direction and a large number of radiation fins having an oil passage (not shown) which causes these oil tanks 88, 89 to communicate with each other, and an upper end portion thereof is supported on the vehicle body frame 3. The oil tanks 88, 89 are formed so as to slant to be higher in the front thereof and, at the same time, formed such that the oil tank 88 on the vehicle body right side is located further behind the vehicle body than the other oil tank 89. A lower end portion of the oil tank 88 on the vehicle body right side is connected to the oil pan 17 via an upstream side oil pipe 91, and an upper end portion of the oil tank 89 on the vehicle body left side is connected to the oil pan 17 via a downstream side oil pipe 92.

As shown in Figs. 1 and 2, an upstream side end portion of the upstream side pipe 91 supplying oil from the oil pan 17 to the oil cooler 87 can be connected to the lower end portion of the oil pan 17 or, as shown in Fig. 3, can be connected to the middle of a rear wall 17a of the oil pan 17. In Fig. 1, what is drawn with chain double-dashed lines in front of this oil cooler 87 and denoted by reference numeral 93 is a duct for guiding traveling wind to the oil cooler 87. This duct 93 is formed integrally with a lower cowling 94 such that traveling wind having passed the side of the front wheel 4 passes the side of the lower end portion of the engine 2 substantially horizontally to be guided to the oil cooler 87. In Fig. 1, although the duct 93 and the exhaust pipe 16 are drawn as if they overlap with each other, since the exhaust pipe 16 is laid in the central portion in the vehicle width direction and the duct 93 is provided on both sides of the exhaust pipe 16, none of them interferes with each other.

In the case in which oil cannot be cooled sufficiently with the oil cooler 87 of the air cooling type, as indicated by chain double-dashed lines in Fig. 3, the oil cooler 87 can be replaced with an oil cooler of a water cooling type 95. In replacing oil coolers in this way, the oil pan 17 is also replaced with one for the water cooling type oil cooler 95. That is, since two types of oil coolers with different cooling systems can be used by simply replacing the oil pan 17, increase in cost for replacing oil coolers can be controlled as much as possible.

In the motorcycle engine 2 constituted as described above, the crankshaft 13 rotates, whereby the rotation is transmitted from the deceleration small gear 22 to the coupling gear 71 of the cooling water pump 31 by the power transmission system consisting of the large diameter gear 77 and the small diameter gear 78 of the idler shaft 77 and coupling gear 75 of the alternator 32, and the cooling water pump 31 is driven.

Therefore, since the alternator 32 located on the one end side of the power transmission route consisting of the gears coupling the plural accessories (the cooling water pump 31 and the alternator 32) drives the cooling water pump 33 located on the other end side thereof, in transmitting rotation of the crankshaft 13 to the cooling water pump 31 arranged in a position where a distance from the crankshaft 13 is relatively long, the transmission of the rotation can be performed using only the components constituting the respective accessories. As a result, the plural accessories can be driven by transmission means with much simpler structure compared with that of the conventional transmission means which extends long in the crankcase 12.

In addition, the engine 2 of this embodiment adopts the structure in which the driving gear 82 for the oil pump 33 is engaged with the small diameter gear 78 of the idler shaft 77 located at the lower end of the gear coupling portion which transmits power to the cooling water pump 31, the oil pump 33 is disposed in the crankcase 12 in the lower portion on the vehicle body front side and, at the same time, oil in the oil pan 17 is supplied to the oil cooler 87, 95 attached to the rear end portion of the oil pan 17. Therefore, the plural accessories including the oil pump 33 can be driven by transmission means with a simple structure.

In particular, since the oil cooler 87 is arranged in a dead space which is formed behind the oil pan 17 by providing the oil pump 3 in the front end portion of the crankcase 12, despite the fact that the relatively large sized air cooling oil cooler 87 is equipped, the lower portion of the engine 2 can be formed in a small size.

Moreover, since rotation is transmitted to the driving gear on the crankshaft 13 side (the small diameter gear 78 of the idler shaft 77), which drives the accessories (the cooling water pump 31 and the alternator 32) in this engine 2, from the deceleration small gear 22 which transmits rotation of the crankshaft 13 to the clutch 24 of the rear wheel drive system, gears designated to transmit rotation to the accessories do not have to be formed in the crankshaft 13. Consequently, the number of gears provided in the crankshaft 13 can be reduced as much as possible, and the crankshaft 13 can be formed short.

Furthermore, since the cooling water pump 31 and the alternator 32 are disposed so as to be distributed to one side and the other side of the vehicle width direction with the gear coupling portion as a center, it is possible to prevent housings of respective accessories arranged in the vertical direction from interfering with each other. Consequently, a space in which the cooling water pump 31 and the alternator 32 are provided can be reduced in size in the vertical direction.

Since the engine 2 according to this embodiment is provided with the cooling water pump 31, the alternator 32, and the oil pump 33 in the front end portion thereof, the front surface of the engine 2 is formed to project forwardly. However, since only the upstream portion 16a of the exhaust pipe 16 exists in front of the engine 2 and an inner side of a curved part of this upstream portion 16a is a dead space, no inconvenience is caused despite the structure in which the front end portion of the engine 2 projects forwardly as described above.

In addition, since the alternator 32 is provided on the front side of the cylinder body 11 and the dead space can be utilized for maintenance, an engine, which is easily maintained, can be manufactured.

The above-mentioned embodiment describes an example in which the cooling water pump 31 and the alternator 32 are coupled by a gear and the cooling water pump 31 is driven by the alternator 32. However, an accessory to be an object of the drive structure in accordance with the present teaching of the embodiment is not limited to the cooling water pump 31 and the altemator 32. For example, the cooling water pump 31, the alternator 32, and the oil pump 33 can be coupled by gears such that a power transmission route is formed serially and, in the case in which two accessories are coupled by a gear, combination of these accessories can be changed appropriately.

The description above discloses (amongst others) a motorcycle engine in which plural accessories driven by a crankshaft are disposed side by side in a vertical direction in an end portion on a vehicle body front side of an engine in a state in which axial lines thereof becomes parallel with a vehicle width direction, wherein rotary shafts of these accessories are coupled so as to be operated in association with each other by gears, and wherein a gear located in one end portion of a power transmission route consisting of these coupling gears is engaged with a driving gear on a crankshaft side.

In other words, there is disclosed a motorcycle engine in which plural accessories driven by a crankshaft are disposed one above the top of the other in an end portion of a vehicle body front side of an engine in a state in which axial lines thereof becomes parallel with a vehicle width direction, rotary shafts of these accessories are coupled so as to be operated in association with each other by gears, and a gear located in one end portion of a power transmission route consisting of these coupling gears is engaged with a driving gear on a crankshaft side.

Accordingly, since rotation of the crankshaft is transmitted from one end portion to the other portion of the power transmission route via each coupling gear, an accessory located on one end side of the power transmission route can drive another accessory located on the other end side.

Thus, as described above, an accessory located on one side of a power transmission route consisting of gears, which couple plural accessories so as to operate in association with each other, drives another accessory located on the other end side. Thus, in transmitting rotation of a crankshaft to an accessory arranged in a position relatively away from the crankshaft, the transmission of the rotation can be performed using only components constituting each accessory. Therefore, since the plural accessories can be driven by transmission means with much simpler structure compared with that of the conventional drive means extending long in a crankcase, an engine can be formed in a small size.

As described above, it is preferable that a driving gear for an oil pump is engaged with a gear located at a lower end of a gear coupling portion, and that the oil pump is disposed in a lower part on a vehicle front side in a crankcase and supplies oil in an oil pan to an oil cooler attached to a rear end portion of the oil pan. Accordingly, plural accessories including an oil pump can be driven by transmission means with a simple structure. Since plural accessories including an oil pump can be driven by transmission means with a simple structure, and transmission means which solely transmits power of an engine to the oil pump becomes unnecessary, the engine can be formed in a smaller size.

As disclosed above, it is further preferable that rotation is transmitted to the driving gear on the crankshaft side for driving the accessories from a deceleration small gear for transmitting rotation of the crankshaft to a clutch of a rear wheel drive system. Since a gear dedicated to transmit rotation to accessories does not have to be formed on the crankshaft, the crankshaft can be formed short compared with the case in which this gear is provided. In other words, since a gear for solely transmitting rotation to an accessory does not have to be formed in a crankshaft, the crankshaft can be formed shorter compared with the case in which this gear is provided. Therefore, a motorcycle engine which is small in size in a vehicle width direction can be provided.

As described above, it is still further preferable if the accessories are disposed so as to be distributed to one side and the other side of the vehicle width direction with the gear coupling portion as a center. Accordingly, it is possible to prevent housings for respective accessories arranged one above the top of the other from interfering with each other. Since it is possible to prevent housings of respective accessories arranged in the vertical direction from interfering with each other, a space in which the plural accessories are provided can be reduced in size in the vertical direction, and an engine can be formed in a smaller size.

Therefore, in brief, to simplify a structure of transmission means for transmitting power of an engine to accessories to form the engine in a small size, plural accessories (a cooling water pump 31 and an alternator 32) driven by a crankshaft 13 might be disposed one above the other in a vertical direction in an end portion on a vehicle body front side of an engine 2 in a state in which axial lines thereof becomes parallel with a vehicle width direction, rotary shafts 37, 72 of these accessories might be coupled with each other so as to be operated in association with each other by coupling gears 71, 75, and a gear (coupling gear for the alternator 32) located in one end portion of a power transmission route consisting of these coupling gears 71, 75 might be engaged with a driving gear (small diameter gear 78) on the crankshaft 13 side.

## Claims

1. Motorcycle engine having a power transmission route consisting of serially arranged coupling gears (71,75,82) serially coupling together accessories (31.32.33) driven by a crankshaft (13).

2. Motorcycle engine according to claim 1, **characterized in that** a rotation of the crankshaft (13) is transmitted from one end portion of the power transmission route to the other portion thereof via the coupling gears (71,75,82), wherein each of the accessories (31,32,33) is connected to one of said serially arranged coupling gears (71,75,82).

3. Motorcycle engine according to claim 1 or 2, **characterized in that** a rotation of the crankshaft (13) is transmitted to a driving gear (78) on a crankshaft side for driving the accessories from a deceleration small gear (22), said deceleration small gear (22) being adapted to transmit rotation of the crankshaft (13) to a clutch (24) of a rear wheel drive system.

4. Motorcycle engine according to claim 3, **characterized by** an idler gear located in one end portion of the power transmission route, said idler gear comprises an idling shaft (77), a large diameter gear (79) constituting said driving gear in mesh contact with the deceleration small gear (22) of the crankshaft (13), and a small diameter gear (78) in mesh contact with at least one of the coupling gears (75,82).

5. Motorcycle engine according to claim 4, **characterized in that** the small diameter gear (78) of the idler gear is in mesh contact with two of the accessories (32,33), said two accessories (32,33) preferably being arranged on in general opposite sides of the idler gear.

6. Motorcycle engine according to at least one of the preceding claims 1 to 5, **characterized in that** the accessories (31,32,33) connected by the power transmission route, in particular a cooling water pump (31), an alternator (32), and an oil pump (33), are provided in a front end portion of the engine (2) and an end portion on an vehicle body right side, one above the top of the other.

7. Motorcycle engine according to claim 6, **characterized in that** said accessories (31,32,33) are disposed side by side in a vertical direction in the end portion on a vehicle body front side of an engine such that axial lines thereof become parallel with a vehicle width direction, wherein rotary shafts (37,72,83) of these accessories (31,32,33) are connected to the coupling gears (71,75,82) to be operated in association with each other.

8. Motorcycle engine according to claims 6 or 7, **characterized in that** the coupling gears (71,75) connected to the rotary shafts (37,72) of the alternator (32) and the cooling water pump (31) are in mesh contact with each other, wherein one of said coupling gears (71,75), either the coupling gear (75) connected to the rotary shaft (72) of the alternator (32) or the coupling gear (71) connected to the rotary shaft (37) of the cooling water pump (31) is in mesh contact with the small diameter gear (7).

9. Motorcycle engine according to at least one of the preceding claims 4 to 8, **characterized by** an oil pump (33) disposed in a lower part on a vehicle front side in a crankcase (12) and supplying oil from an oil pan to an oil cooler (87) attached to a rear end portion of the oil pan, wherein the coupling gear (82) connected to the driving shaft (83) of the oil pump (33) is engaged with the small diameter gear (78).

10. Motorcycle engine according to at least one of the preceding claims 1 to 9, **characterized in that** the accessories (31,32,33) are disposed so as to be distributed to one side and the other side of the vehicle width direction with a gear coupling portion of the power transmission route as a center.

11. Motorcycle engine according to claim 10, **characterized in that** the alternator (32) and the cooling water pump (31) are disposed so as to be distributed to one side and the other side of the vehicle width direction with the gear coupling portion having the respective coupling gears (71,75) as a center.

12. Motorcycle engine according to at least one of the preceding claims 3 to 11, **characterized by** a fuel pump (34), wherein power is transmitted to the fuel pump (34) via the deceleration small gear (22) of the crank shaft (13) and a deceleration large gear (23) of the rear wheel drive system.

## Patentansprüche

1. Motorradmotor mit einem Leistungsübertragungsweg, bestehend aus seriell angeordneten Kupplungszahnrädern (71, 75, 82), die Zusatzgeräte (31, 32, 33), angetrieben durch eine Kurbelwelle (13), seriell kuppeln.

2. Motorradmotor nach Anspruch 1, **dadurch gekennzeichnet, dass** eine Drehung der Kurbelwelle (13) von einem Endabschnitt des Leistungsübertragungsweges zu dem anderen Abschnitt derselben über die Kupplungszahnräder (71, 75, 82) übertragen wird, wobei jedes der Zusatzgeräte (31, 32, 33) mit einem der seriell angeordneten Kupplungszahnräder (71, 75, 82) verbunden ist.

3. Motorradmotor nach Anspruch 1 oder 2, **dadurch gekennzeichnet, dass** eine Drehung der Kurbelwelle (13) zu einem Antriebszahnrad (78) auf einer Seite der Kurbelwelle zum Antreiben der Zusatzgeräte von einem kleinen Verlangsamungszahnrad (22) übertragen wird, wobei das kleine Verlangsamungszahnrad (22) vorgesehen ist, eine Drehung der Kurbelwelle (13) auf eine Kupplung (24) eines Hinterradantriebssystems zu übertragen.

4. Motorradmotor nach Anspruch 3, **gekennzeichnet durch** ein Leerlaufzahnrad, angeordnet an einem Endabschnitt des Leistungsübertragungsweges, wobei das Leerlaufzahnrad aufweist eine Leerlaufwelle (77), ein Zahnrad (79) mit großem Durchmesser, dass das Antriebszahnrad bildet, in Kämmeingriff mit dem kleinen Verlangsamungszahnrad (22) der Kurbelwelle (13), und ein Zahnrad (78) mit kleinem Durchmesser in Eingriffskontakt mit zumindest einem der Kupplungszahnräder (75, 82).

5. Motorradmotor nach Anspruch 4, **dadurch gekennzeichnet, dass** das Zahnrad (78) mit kleinem Durchmesser des Leerlaufzahnrades in Kämmeingriff mit zwei der Zusatzgeräte (32, 33) ist, wobei die zwei Zusatzgeräte (32, 33) vorzugsweise auf im Wesentlichen gegenüberliegenden Seiten des Leerlaufzahnrades angeordnet sind.

6. Motorradmotor nach zumindest einem der vorhergehenden Ansprüche 1 bis 5, **dadurch gekennzeichnet, dass** die Zusatzgeräte (31, 32, 33), verbunden durch den Leistungsübertragungsweg, insbesondere eine Kühlwasserpumpe (31), eine Wechselstrommaschine (32) und eine Ölpumpe (33) in einem vorderen Endabschnitt des Motors (2) und einem Endabschnitt auf einer rechten Seite der Fahrzeugkarosserie, eines oberhalb der Oberseite des anderen vorgesehen sind.

7. Motorradmotor nach Anspruch 6, **dadurch gekennzeichnet, dass** die Zusatzgeräte (31, 32, 33) nebeneinander in einer vertikalen Richtung in dem Endabschnitt einer Vorderseite der Fahrzeugkarosserie eines Motors derart angeordnet sind, dass axiale Linien derselben mit der Richtung der Breite des Fahrzeuges parallel werden, wobei Drehwellen (37, 72, 83) dieser Zusatzgeräte (31, 32, 33) mit den Kupplungszahnrädern (71, 75, 82) verbunden sind, um in Verbindung miteinander betätigt zu werden.

8. Motorradmotor nach Anspruch 6 oder 7, **dadurch gekennzeichnet, dass** die Kupplungszahnräder (71, 75), verbunden mit den Drehwellen (37, 72) der Wechselstrommaschine (32) und der Kühlwasserpumpe (31), miteinander in Kämmeingriff sind, wobei eines der Kupplungszahnräder (71, 75), entweder das Kupplungszahnrad (75), verbunden mit der Drehwelle (72) der Wechselstrommaschine (32), oder das Kupplungszahnrad (71), verbunden mit der Drehwelle (37) der Kühlwasserpumpe (31), mit dem Zahnrad (7) mit kleinem Durchmesser in Kämmeingriff ist.

9. Motorradmotor nach zumindest einem der vorhergehenden Ansprüche 4 bis 8, **gekennzeichnet durch** eine Ölpumpe (33), angeordnet in dem unteren Teil einer Fahrzeugvorderseite in einem Kurbelgehäuse (12) und die Öl aus einer Ölwanne zu einem Ölkühler (87), verbunden mit einem hinteren Endabschnitt der Ölwanne, zuführt, wobei das Kupplungszahnrad (82), verbunden mit der Antriebswelle (83) der Ölpumpe (33), mit dem Zahnrad (78) mit kleinem Durchmesser im Eingriff ist.

10. Motorradmotor nach zumindest einem der vorhergehenden Ansprüche 1 bis 9, **dadurch gekennzeichnet, dass** die Zusatzgeräte (31, 32, 33) angeordnet sind, um auf der einen Seite und auf der anderen Seite in Richtung der Fahrzeugbreite verteilt zu sein, mit einem Zahnrad- Kupplungsabschnitt des Leistungsübertragungsweges als einer Mitte.

11. Motorradmotor nach Anspruch 10, **dadurch gekennzeichnet, dass** die Wechselstrommaschine (32) und die Kühlwasserpumpe (31) angeordnet sind, um auf der einen Seite und auf der anderen Seite in Richtung der Fahrzeugbreite verteilt zu sein, mit dem Zahnrad- Kupplungsabschnitt, der die jeweiligen Kupplungszahnräder (71, 75) aufweist, als eine Mitte.

12. Motorradmotor nach zumindest einem der vorhergehenden Ansprüche 3 bis 11, **gekennzeichnet durch** eine Kraftstoffpumpe (34), wobei Leistung zu der Kraftstoffpumpe (34) über das kleine Verlangsamungszahnrad (22) der Kurbelwelle (13) und ein großes Verlangsamungszahnrad (23) des Hinterrad- Antriebssystems übertragen wird.

## Revendications

1. Moteur pour motocycle ayant un parcours de transmission de puissance consistant en des engrenages d'accouplement agencés en série (71, 75, 82) couplant ensemble en série des accessoires (31, 32, 33) entraînés par un vilebrequin (13).

2. Moteur pour motocycle selon la revendication 1, **caractérisé en ce qu'**une rotation du vilebrequin (13) est transmise d'une portion d'extrémité du parcours de transmission de puissance à son autre portion via les engrenages d'accouplement (71, 75, 82), dans lequel chacun des accessoires (31, 32, 33) est raccordé à l'un desdits engrenages d'accouplement agencés en série (71, 75, 82).

3. Moteur pour motocycle selon la revendication 1 ou 2, **caractérisé en ce qu'**une rotation du vilebrequin (13) est transmise à un engrenage d'entraînement (78) sur un côté du vilebrequin pour entraîner les accessoires à partir d'un petit engrenage de décélération (22), ledit petit engrenage de décélération (22) étant adapté pour transmettre une rotation du vilebrequin (13) à un embrayage (24) d'un système d'entraînement par les roues arrière.

4. Moteur pour motocycle selon la revendication 3, **caractérisé en ce qu'**un engrenage fou est situé dans une portion d'extrémité du parcours de transmission de puissance, ledit engrenage fou comprenant un arbre fou (77), un engrenage de grand diamètre (79) constituant ledit engrenage d'entraînement en contact par engrènement avec le petit engrenage de décélération (22) du vilebrequin (13), et un engrenage de petit diamètre (78) en contact par engrènement avec au moins un des engrenages d'accouplement (75, 82).

5. Moteur pour motocycle selon la revendication 4, **caractérisé en ce que** l'engrenage de petit diamètre (78) de l'engrenage fou est en contact par engrènement avec deux des accessoires (32, 33), lesdits deux accessoires (32, 33) étant de préférence agencés sur des côtés généralement opposés de l'engrenage fou.

6. Moteur pour motocycle selon au moins l'une des revendications 1 à 5 précédentes, **caractérisé en ce que** les accessoires (31, 32, 33) raccordés par le parcours de transmission de puissance, en particulier une pompe à eau de refroidissement (31), un alternateur (32), et une pompe à huile (33), sont prévus dans une portion d'extrémité avant du moteur (2) et une portion d'extrémité sur un côté droit de la carrosserie de véhicule, l'un au-dessus du sommet de l'autre.

7. Moteur pour motocycle selon la revendication 6, **caractérisé en ce que** lesdits accessoires (31, 32, 33) sont disposés côte-à-côte dans une direction verticale dans la portion d'extrémité sur un côté avant de la carrosserie de véhicule d'un moteur de sorte que ses lignes axiales deviennent parallèles à la direction dans le sens de la largeur du véhicule, dans lequel les arbres rotatifs (37, 72, 83) de ces accessoires (31, 32, 33) sont raccordés aux engrenages d'accouplement (71, 75, 82) de façon à être mis en fonctionnement en association les uns avec les autres.

8. Moteur pour motocycle selon la revendication 6 ou 7, **caractérisé en ce que** les engrenages d'accouplement (71, 75) raccordés aux arbres rotatifs (37, 72) de l'alternateur (32) et de la pompe à eau de refroidissement (31) sont en contact par engrènement les uns avec les autres, dans lequel l'un desdits engrenages d'accouplement (71, 75), soit l'engrenage d'accouplement (75) raccordé à l'arbre rotatif (72) de l'alternateur (32) soit l'engrenage d'accouplement (71) raccordé à l'arbre rotatif (37) de la pompe à eau de refroidissement (31), est en contact par engrènement avec l'engrenage de petit diamètre (7).

9. Moteur pour motocycle selon au moins l'une des revendications 4 à 8 précédentes, **caractérisé en ce qu'**une pompe à huile (33) est disposée dans une partie inférieure sur un côté avant de véhicule dans un carter (12) et délivre de l'huile d'un bac à huile à un refroidisseur d'huile (87) fixé à une portion d'extrémité arrière du bac à huile, dans lequel l'engrenage d'accouplement (82) raccordé à l'arbre d'entraînement (83) de la pompe à huile (33) est mis en prise avec l'engrenage de petit diamètre (78).

10. Moteur pour motocycle selon au moins l'une des revendications 1 à 9 précédentes, **caractérisé en ce que** les accessoires (31, 32, 33) sont disposés de façon à être répartis sur un côté et l'autre côté de la direction dans le sens de la largeur du véhicule avec une portion d'accouplement d'engrenage du parcours de transmission de puissance en tant que centre.

11. Moteur pour motocycle selon la revendication 10, **caractérisé en ce que** l'alternateur (32) et la pompe à eau de refroidissement (31) sont disposés de façon à être répartis sur un côté et l'autre côté de la direction dans le sens de la largeur du véhicule avec la portion d'accouplement d'engrenage ayant les engrenages d'accouplement (71, 75) respectifs en tant que centre.

12. Moteur pour motocycle selon au moins l'une des revendications 3 à 11 précédentes, **caractérisé en ce qu'**il comprend une pompe à carburant (34), dans lequel la puissance est transmise à la pompe à carburant (34) via le petit engrenage de décélération (22) du vilebrequin (13) et un grand engrenage de décélération (23) du système d'entraînement par les roues arrière.
